# EUROPEAN PATENT APPLICATION

(11) **EP 1 806 656 A2**
(43) Date of publication of application: **11.07.2007**
(21) Application number: 06256242.6
(22) Date of filing: 07.12.2006
(51) Int. Cl.: G06F 9/445

(54) **Information distribution apparatus**

(30) Priority: 07.12.2005 JP 2005352941
(71) Applicant: SEIKO EPSON CORPORATION, Shinjuku-ku Tokyo 163-0811 (JP)
(72) Inventor: Fukao, Akihito, Suwa-shi Nagano 392-8502 (JP); Taniguchi, Shinya, Suwa-shi Nagano 392-8502 (JP)
(74) Representative: Kenyon, Sarah Elizabeth

(57) **Abstract**

An information distribution apparatus (13)that distributes an application program to an external apparatus (14A, 14B) through a communication line (12) includes: an application storage unit (24) that stores a plurality of application programs; and an application distribution unit (26) that, when a distribution request of an application program is made from the external apparatus, reads the application program corresponding to the distribution request from the application storage unit and then distributes the read application program together with installation resource information which is information on resources required to install the application program.

## Description

The present invention relates to an information distribution apparatus, an information processing apparatus, a printing apparatus, a control method, and a control program. In particular, the invention relates to a technique of installing an application program.

In the related art, when installing an application program (hereinafter, simply referred to as an 'application'), which has been downloaded (acquired) through a network or a USB cable, in a built-in apparatus, there has been a possibility that an original operation of the built-in apparatus will not be performed because the operation of the built-in apparatus is prohibited due to the installed application or an operation of the installed application, if the installed application is an application that uses a great amount of resources to such an extent to exceed an allowable range of resources such as performance, memory, or file system of the built-in apparatus.

In order to solve the problem, JP-A-5-270069 discloses a technique in which conditions of resources required for an operation of an application are acquired beforehand when downloading the application and then the application is not installed if the acquired conditions of the resources are not within the allowable range.

However, in the technique described above, even though there is no problem related to resources at the time of an operation of an application, a problem may occur at the time of installation of an application because resources at the time of installation of an application are not considered.

For example, in the case when an application, of which size at the time of installation is very large, has been downloaded, the size of the application may exceed the capacity of a disc under the operating environment of a corresponding built-in apparatus. In addition, in the case when an application is configured to include a very large number of files, if an upper limit of the number of files that can be simultaneously processed under the operating environment of a corresponding built-in apparatus is exceeded, there is a possibility that file operation will not be possible due to the installation of the application.

### SUMMARY

An advantage of some aspects of the invention is that it provides an information distribution apparatus, an information processing apparatus, a printing apparatus, a control method, and a control program, which guarantee downloading of an application and an operation of the application when distributing the application to an apparatus.

According to an aspect of the invention, an information distribution apparatus that distributes an application program to an external apparatus through a communication line includes: an application storage unit that stores a plurality of application programs; and an application distribution unit that, when a distribution request of an application program is made from the external apparatus, reads the application program corresponding to the distribution request from the application storage unit and then distributes the read application program together with installation resource information which is information on resources required to install the application program.

In the configuration described above, the application storage unit stores the plurality of application programs.

Accordingly, when a distribution request of an application program is made from an external apparatus, the application distribution unit reads the application program corresponding to the distribution request from the application storage unit and then distributes the read application program together with installation resource information which is information on resources required to install the application program.

In this case, preferably, the application storage unit associates each of the application programs with the installation resource information corresponding to each of the application programs when storing the application programs.

Further, preferably, the installation resource information includes at least information on the size of the application program and the number of files that form the application program.

Furthermore, preferably, the installation resource information is configured as an electronic certificate.

In addition, it is preferable to further include a list distribution unit that, when a distribution request of a list of application programs that can be supplied is made from the external apparatus, distributes the list of application programs that can be supplied.

Further, according to another aspect of the invention, an information processing apparatus to which an application program is distributed from an external information distribution apparatus through a communication line includes: a distribution request unit that requests the information distribution apparatus to distribute an application program through the communication line; and an installation unit that, when the application program is distributed from the information distribution apparatus together with installation resource information in response to the distribution request, refers to the installation resource information which is information on resources required to install the application program and then installs the application program if it is determined that the application program is installable under an operating environment of the information processing apparatus.

In the configuration described above, the distribution request unit requests the information distribution apparatus to distribute an application program through the communication line.

Accordingly, when the application program is distributed from the information distribution apparatus together with installation resource information in response to the distribution request, the installation unit installs the application program if it is determined that the application program is installable under an operating environment of the information processing apparatus with reference to the installation resource information which is information on resources required to install the application program.

Furthermore, according to still another aspect of the invention, a printing apparatus which has a printing mechanism and to which an application program, such as an application for printing, is distributed from an external information distribution apparatus through a communication line includes: a distribution request unit that requests the information distribution apparatus to distribute an application program through the communication line; and an installation unit that, when the application program is distributed from the information distribution apparatus together with installation resource information in response to the distribution request, refers to the installation resource information which is information on resources required to install the application program and then installs the application program if it is determined that the application program is installable under an operating environment of the printing apparatus.

In the configuration described above, the distribution request unit requests the information distribution apparatus to distribute an application program, such as an application for printing, through the communication line.

Accordingly, when the application program is distributed from the information distribution apparatus together with installation resource information in response to the distribution request, the installation unit installs the application program if it is determined that the application program is installable under an operating environment of the printing apparatus with reference to the installation resource information which is information on resources required to install the application program.

Moreover, according to still another aspect of the invention, a control method of an information distribution apparatus which includes an application storage unit that stores a plurality of application programs and distributes the application programs to an external apparatus through a communication line includes: determining whether or not a distribution request of an application program has been made from the external apparatus; and reading the application program corresponding to the distribution request from the application storage unit and then distributing the application program together with installation resource information if it is determined that the distribution request has been made, the installation resource information being information on resources required to install the application program.

Furthermore, according to still another aspect of the invention, a control method of an information processing apparatus to which an application program is distributed from an external information distribution apparatus through a communication line includes: requesting the information distribution apparatus to distribute an application program through the communication line; and performing installation of the application program in which when the application program is distributed from the information distribution apparatus together with installation resource information in response to the distribution request, the installation resource information which is information on resources required to install the application program is referred and then the application program is installed if it is determined that the application program is installable under an operating environment of the information processing apparatus.

Furthermore, according to still another aspect of the invention, a control program causing a computer to control an information distribution apparatus which includes an application storage unit that stores a plurality of application programs and distributes the application programs to an external apparatus through a communication line includes: determining whether or not a distribution request of an application program has been made from the external apparatus; and reading the application program corresponding to the distribution request from the application storage unit and then distributing the application program together with installation resource information if it is determined that the distribution request has been made, the installation resource information being information on resources required to install the application program.

Furthermore, according to still another aspect of the invention, a control program causing a computer to control an information processing apparatus to which an application program is distributed from an external information distribution apparatus through a communication line includes: requesting the information distribution apparatus to distribute an application program through the communication line; determining whether or not the application program is installable under an operating environment of the information processing apparatus with reference to installation resource information when the application program is distributed from the information distribution apparatus together with installation resource information in response to the distribution request, the installation resource information being information on resources required to install the application program; and installing the application program if it is determined that the application program is installable under an operating environment of the information processing apparatus.

### BRIEF DESCRIPTION OF THE DRAWINGS

The invention will be described with reference to the accompanying drawings, wherein like numbers reference like elements.

Fig. 1 is a block diagram illustrating a schematic configuration of an application distribution system according to an embodiment of the invention.

Fig. 2 is a functional block diagram illustrating a printer and a distribution server.

Fig. 3 is an explanatory view illustrating an example of the configuration of a java application.

Fig. 4 is a flow chart illustrating a registration process of a distribution server.

Fig. 5 is a flow chart illustrating an application list request process performed by a printer which is a client.

Fig. 6 is a flow chart illustrating an application list response process performed by a distribution server.

Fig. 7 is a flow chart illustrating a process of distributing an application in a distribution server.

Hereinafter, a preferred embodiment of the invention will be described with reference to the accompanying drawings.

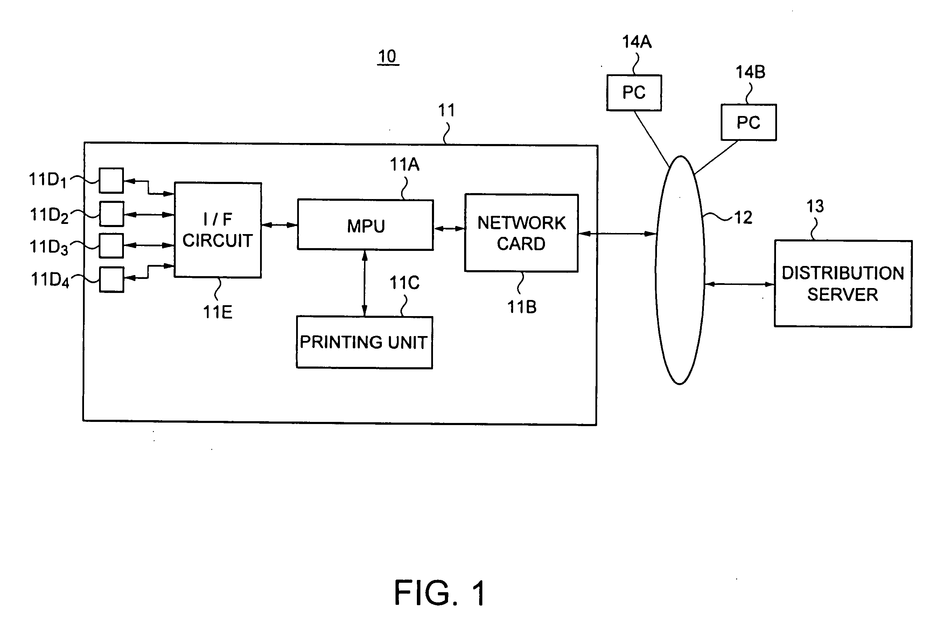

Fig. 1 is a block diagram illustrating a schematic configuration of an application distribution system according to an embodiment of the invention.

An application distribution system 10 includes a printer 11 that functions as an information processing apparatus and performs various printing processes under control of a personal computer to be described later, a network 12 including Internet or LAN to which the printer 11 is connected, a distribution server 13 that is connected to the network 12 so as to distribute applications, and a plurality of personal computers (PCs) 14A and 14B that are connected to the printer 11 through the network 12 so as to perform a printing control.

In this case, applications distributed to the printer 11 include an authentication application used to determine whether a printing output has been made by a regular user or not, a cluster printing (distributed printing) application that allows a plurality of printers to perform distributed processes (for example, the cluster printing application allows each of five printers to print 20 copies of 100 copies, respectively), an image processing application that performs a processing on an image to be printed, and a status management application that is used to notify a management server, an accounting server or the like or a service company for maintenance or consumable-goods supplement of a status of the printer 11.

The printer 11 includes an MPU 11A that controls the overall printer 11, a network card 11B that performs an interface operation between the network 12 and the MPU 11A, a printing unit 11C that actually performs various printing processes under the control of the MPU 11A, and an interface circuit 11E that performs an interface operation between the MPU 11A and USB terminals 11D1 and 11D2, an IEEE 1394 terminal 11D3, and a parallel terminal 11D4.

Here, the MPU 11A is configured as a microcomputer and includes a CPU that controls the overall MPU 11A, a ROM that stores a control program or the like beforehand, and a RAM that temporarily stores data or the like.

In addition, the printing unit 11C includes a print head that performs various printing, a carriage mechanism for driving the printing head in a predetermined printing direction, and a transport mechanism for transporting a recording medium.

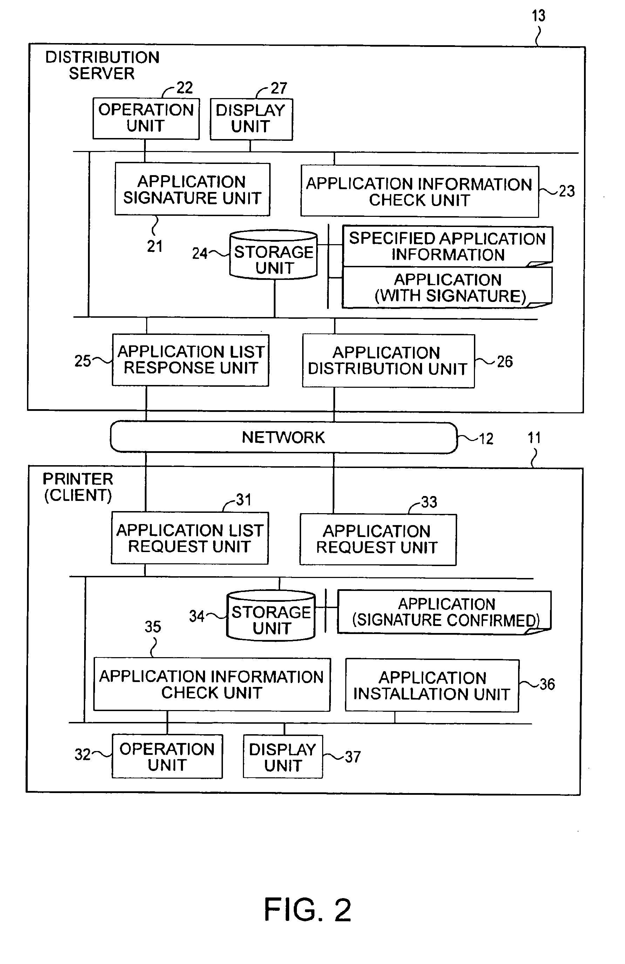

Fig. 2 is a functional block diagram illustrating a printer and a distribution server.

An application signature unit 21 of the distribution server 13 issues an electronic certificate (electronic signature) to an application, which has been confirmed to be installable in an external apparatus (for example, the printer 11) by an application information check unit 23, among applications designated by an operator through an operation unit 22. The application to which the electronic certificate has been issued is stored in a storage unit 24.

The operation unit 22 includes user interfaces, such as a keyboard and a mouse, and specifies an application to which an electronic certificate is to be issued according to an operator's operation and instructs the electronic certificate to be issued thereto.

The application information check unit 23 creates application information of the application specified by the application signature unit 21 and determines whether or not the application is within a range of a specified value that has been preset for each external apparatus to be connected thereto with reference to specified application information.

Here, the application information includes at least application size information related to the size of an application and file information related to files for realizing the application. The file information includes at least the number of executable-format files at the time of installation, the number of directories at the time of installation, and the number of other files at the time of installation. In the case when an archive file (a file obtained when compressing a plurality of files into one file) is included as other files, the file information includes the number of executable-format files at the time of installation obtained when uncompressing the archive file, the number of directories at the time of installation, and the number of other files (for example, a text file, an image file, and an icon file) at the time of installation.

More specifically, an application developed on the basis of java will now be described as an example.

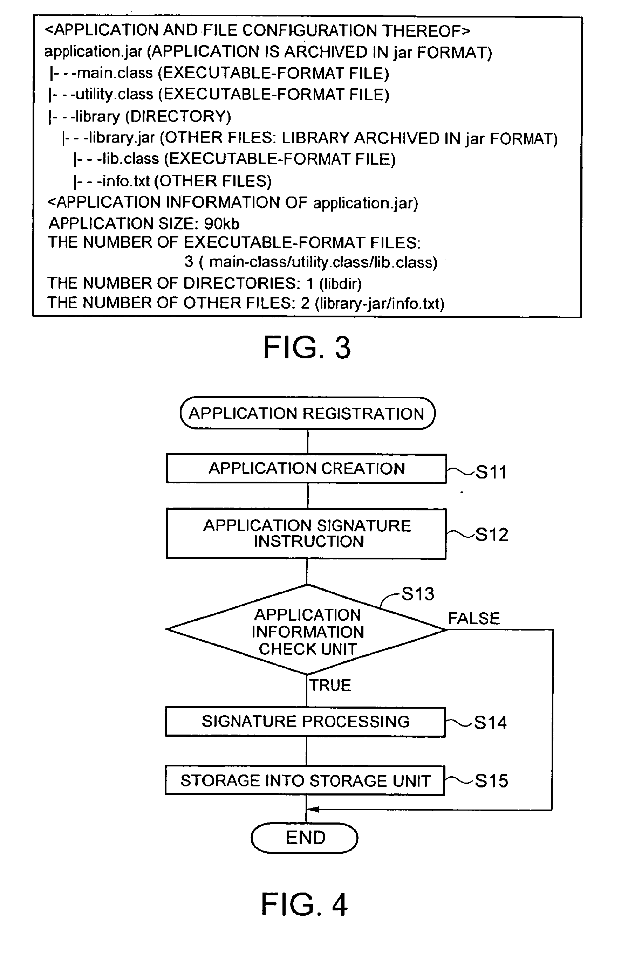

Fig. 3 is an explanatory view illustrating an example of the configuration of a java application.

The java application (file name: application.jar) is archived in the jar format and includes two executable-format files of 'main.class' and 'utility.class' and one directory of 'libdir'.

The directory 'libdir' includes a library of 'library.jar' archived in the jar format. The library of 'library.jar' includes one executable-format file of 'lib.class' and a text file (other files) of 'info.txt'.

In this case, the application information is configured as follows.
Application size: 90 kbyte
   The number of executable-format files: 3 (main.class / utility.class / lib.class)
   The number of directories: 1 (libdir)
   The number of other files: 2 (library.jar / info.txt)

Specified application information is set for each apparatus which is a client and, for example, is specified as follows.
Application size: 100 kbyte (specified upper limit)
   The number of executable-format files: 100 (specified upper limit)
   The number of directories: 100 (specified upper limit)
   The number of other files: 100 (specified upper limit)

The storage unit 24 stores specified application information for each external apparatus and also stores a plurality of applications to be distributed to which the electronic certificates have been issued.

An application list response unit 25 creates a list of applications currently stored in the storage unit 24 in response to an-application list request from the printer 11, which is a client, and distributes the application list to the printer 11 which is a client.

An application distribution unit 26 reads an application, which has been requested, from the storage unit 24 in response to an application distribution request from the printer 11 which is a client and distributes the apparatus to the printer 11.

A display unit 27 includes a display and displays an operation result of an operation unit and details of an operation so as to notify an operator of the operation result and the details of the operation.

An application list request unit 31 of the printer 11, which is a client, requests the distribution server 13 to distribute the application list to the printer 11 according to the operation state of the operation unit 32.

The operation unit 32 includes a user interface, such as a keyboard and a mouse. In addition, the operation unit 32 instructs an application list request unit to request the application list of the distribution server 13, instructs an application request unit to acquire an application, which corresponds to a user's instruction made with reference to the acquired application list, from the distribution server 13, or instructs an application installation unit to install a corresponding application of applications stored in the storage unit

An application request unit 33 requests an application designated by the operation unit 32 of the distribution server 13 and stores in a storage unit 34 to be described later an application, which has been confirmed in which regular and installation operations can be performed by an application signature check unit 35 to be described later, among distributed applications and then discards the other applications.

The storage unit 34 stores the application, in which the regular and installation operations can be performed, specified by the application request unit 33.

The application signature check unit 35 checks whether or not signature information of the application specified by the application request unit 33 is regular information.

An application installation unit 36 installs an application specified by the operation unit among applications stored in the storage unit 34, that is, applications in which the regular and installation operations can be performed.

The display unit 37 has a display and displays an operation result of the operation unit 32 and details of the operation.

Next, it will be described about a process of registering an application in a distribution server according to an embodiment of the invention.

Fig. 4 is a flow chart illustrating a registration process of a distribution server.

In this case, it is assumed that an application to be registered, that is, an application for which an electronic signature is to be made is stored beforehand at a predetermined URL (application storage location URL) (step S11). For example, the predetermined URL may be a local directory or an address on a network. Specifically, the predetermined URL is configured in the following format. c:¥application.jar
http://server/application.zip

The operation unit of the distribution server 13 designates an application storage location URL and instructs an application signature unit to make a signature with respect to an application belonging to the application storage location URL (step S12).

Then, the application signature unit 21 designates the specified application storage location URL and requests the application information check unit 23 to check the application information.

The application information check unit 23 acquires the application information of the application stored at the specified application storage location URL. In addition, the application information check unit 23 acquires the specified application information on the printer 11 (client) from the storage unit 24, compares the acquired application information with application information of an application previously acquired and stored at the application storage location URL, and determines whether or not all of the information is within a specified value specified in the specified application information (step S13).

In the determination made in the step S13, if any of information included in the application information of the application previously acquired and stored at the application storage location URL is not within the specified value specified in the specified application information (step S13; FALSE), the process is completed.

On the other hand, in the determination made in the step S13, if all of the information included in the application information of the application previously acquired and stored at the application storage location URL is within the specified value specified in the specified application information (step S13; TRUE), a signature processing is performed (step S14) and then the application is stored in a signed application storage URL (signed application storage directory) of the storage unit 24, completing the process (step S15).

Next, a process of installing an installation will be described.

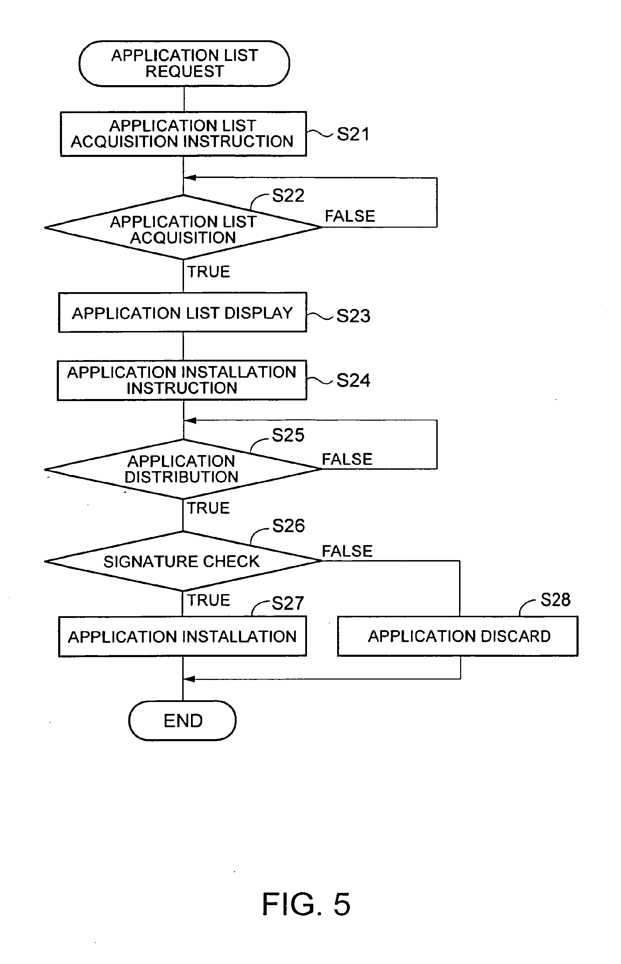

Fig. 5 is a flow chart illustrating an application list request process performed by a printer which is a client.

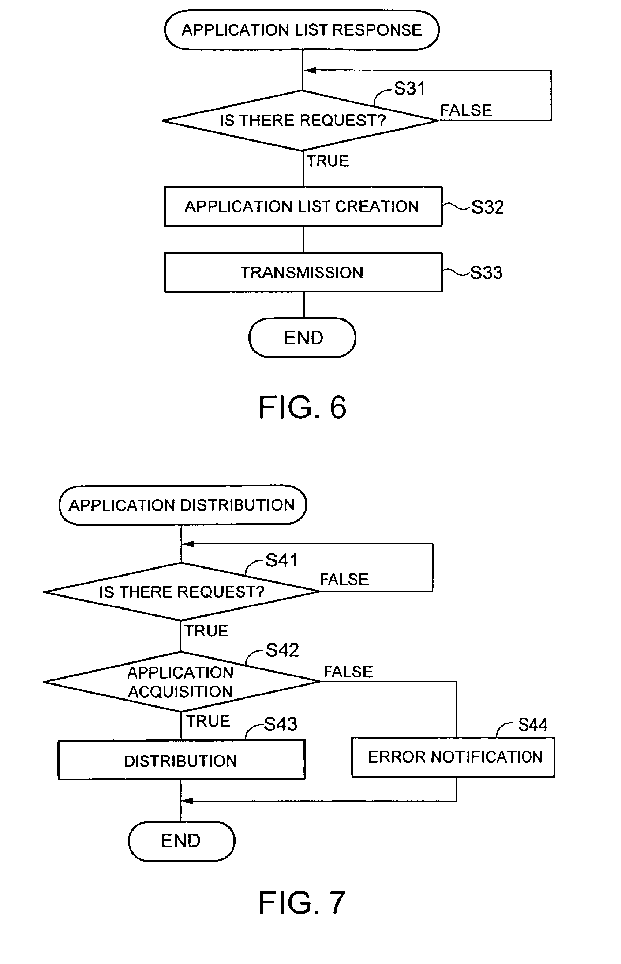

Fig. 6 is a flow chart illustrating an application list response process performed by a distribution server.

First, an operation unit of the printer 11, which is a client, instructs an application list request unit to acquire an application list registered in the distribution server 13 (step S21).

Then, the application list request unit 31 requests the distribution server 13 of an application list through the network 12.

On the other hand, the application list response unit 25 of the distribution server 13 determines whether or not an application list has been requested through the network 12 (step S31) and waits until the application list is requested (step S31; FALSE).

In the determination made in the step S31, if it is determined that an application list has been requested through the network 12 (step S31; TRUE), the application list response unit 25 of the distribution server 13 creates a list of applications stored in the storage unit 24 (step S32) and transmits the created list to the printer 11 through the network 12 (step S33).

The application list request unit 31 of the printer 11 determines whether or not the application list has been acquired (step S22).

In the determination made in the step S22, if it is determined that the application list is not yet acquired (step S22; FALSE), the application list request unit 31 of the printer 11 is in a standby state.

On the other hand, in the determination made in the step S22, if it is determined that the application list has been acquired, (step S22; TRUE), the acquired application list is displayed by the display unit 37 (step S23).

Accordingly, a user selects an application that the user desires to install, through the operation unit 32, from applications included in the application list displayed on the display of the display unit 37 and then performs an installation instruction.

Then, the printer 11 designates the selected application and instructs the application request unit 31 to acquire the application from the distribution server 13 (step S24).

As a result, the application request unit 31 of the printer 11 requests the distribution server 13 of the designated application and then determines whether or not the application has been distributed (step S25).

Fig. 7 is a flow chart illustrating a process of distributing an application in a distribution server.

On the other hand, the application distribution unit 26 of the distribution server 13 determines whether or not there is a distribution request from the application request unit 33 of the printer 11 (step S41).

In the determination made in the step S41, if it is determined that there is no distribution request (step S41; FALSE), the application distribution unit 26 of the distribution server 13 is in a standby state.

On the other hand, in the determination made in the step S41, if it is determined that there is a distribution request (step S41; TRUE), the application distribution unit 26 of the distribution server 13 determines whether or not an application corresponding to the distribution request can be read from the storage unit 24 (step S42).

In the determination made in the step S42, if it is determined that the application corresponding to the distribution request cannot be read from the storage unit 24 (step S42; FALSE), an error notification is notified to the printer 11, which is a client, through the network 12 (step S44).

On the other hand, in the determination made in the step S42, if it is determined that the application corresponding to the distribution request can be read from the storage unit 24 (step S42; TRUE), the corresponding application is distributed to the printer 11, which is a client, through the network 12 (step S43).

On the other hand, the application request unit 33 of the printer 11 is in a standby state (step S25; FALSE), if it is determined that the application is not yet distributed in the determination made in the step S25.

Moreover, if it is determined that the application has been distributed in the determination made in the step S25 (step S25; TRUE), the application request unit 33 hands the application over to the application signature check unit so that the application signature check unit checks a signature.

Then, the application signature check unit determines whether or not a proper signature has been made with respect to the handed-over application (step S26). Here, the proper signature means a signature by which it can be confirmed that the application is installable in the printer 11.

In the determination made in the step S26, if it is determined that an improper signature has been made with respect to the handed-over application, that is, if it is determined that the application cannot be installed in the printer 11 (step S26; FALSE), the application request unit 33 discards the application, completing the process (step S28).

On the other hand, in the determination made in the step S26, if it is determined that a proper signature has been made with respect to the handed-over application (step S26; TRUE) , that is, if it is determined that the application can be installed in the printer 11, the application request unit 33 causes the handed-over application to be stored in the storage unit 34.

Accordingly, the operation unit designates the application acquired by the application request unit 33 and instructs the application installation unit 36 to install the application.

The application installation unit 36 reads the designated application from the storage unit so as to install the application, completing the process (step S27).

As described above, according to the present embodiment, since an installation process is performed on only an application that can be surely installed, the capacity of a disc under the operating environment of a built-in apparatus is not exceeded. As a result, the installation is surely made. Moreover, even if the application is configured to include a very large number of files, the upper limit of the number of files that can be simultaneously processed under the operating environment of the built-in apparatus is not exceeded. As a result, even when the application is installed, the built-in apparatus can be surely operated even after installation, without a case in which file operation becomes impossible.

Hereinbefore, it has been described about a case of using an electronic signature (electronic certificate) as resource information of an application. However, the invention is not limited thereto. For example, a file coded by the use of a password may be used.

In the above description, applications included in the application list are not necessarily limited to an application installable in the printer 11 which is a client. However, a configuration may be adopted such that the printer 11 supplies resource information thereof and the distribution server 13 selects an application installable in the printer 11 on the basis of the resource information so as to create an application list.

Having described about a case in which an external apparatus, which is a client, is a printer (printing apparatus) , the invention is not limited thereto. For example, the invention may be applied to a portable information apparatus, such as a PDA or a mobile phone, or an information processing apparatus having a variety of information processing functions, such as a personal computer, as long as it can be connected to an information distribution apparatus (for example, an information distribution server) through a communication line.

## Claims

1. An information distribution apparatus that distributes an application program to an external apparatus through a communication line, comprising:
an application storage unit that stores a plurality of application programs; and
an application distribution unit that, when a distribution request of an application program is made from the external apparatus, reads the application program corresponding to the distribution request from the application storage unit and then distributes the read application program together with installation resource information which is information on resources required to install the application program.

2. The information distribution apparatus according to Claim 1,
wherein the application storage unit associates each of the application programs with the installation resource information corresponding to each of the application programs when storing the application programs.

3. The information distribution apparatus according to Claim 1,
wherein the installation resource information includes at least information on the size of the application program and the number of files that form the application program.

4. The information distribution apparatus according to Claim 1,
wherein the installation resource information is configured as an electronic certificate.

5. The information distribution apparatus according to Claim 1, further comprising:
a list distribution unit that, when a distribution request of a list of application programs that can be supplied is made from the external apparatus, distributes the list of application programs that can be supplied.

6. An information processing apparatus to which an application program is distributed from an external information distribution apparatus through a communication line, comprising:
a distribution request unit that requests the information distribution apparatus to distribute an application program through the communication line; and
an installation unit that, when the application program is distributed from the information distribution apparatus together with installation resource information in response to the distribution request, refers to the installation resource information which is information on resources required to install the application program and then installs the application program if it is determined that the application program is installable under an operating environment of the information processing apparatus.

7. A printing apparatus which has a printing mechanism and to which an application program, such as an application for printing, is distributed from an external information distribution apparatus through a communication line, comprising:
a distribution request unit that requests the information distribution apparatus to distribute an application program through the communication line; and
an installation unit that, when the application program is distributed from the information distribution apparatus together with installation resource information in response to the distribution request, refers to the installation resource information which is information on resources required to install the application program and then installs the application program if it is determined that the application program is installable under an operating environment of the printing apparatus.

8. A control method of an information distribution apparatus which includes an application storage unit that stores a plurality of application programs and distributes the application programs to an external apparatus through a communication line, comprising:
determining whether or not a distribution request of an application program has been made from the external apparatus; and
reading the application program corresponding to the distribution request from the application storage unit and then distributing the application program together with installation resource information if it is determined that the distribution request has been made, the installation resource information being information on resources required to install the application program.

9. A control method of an information processing apparatus to which an application program is distributed from an external information distribution apparatus through a communication line, comprising:
requesting the information distribution apparatus to distribute an application program through the communication line; and
performing installation of the application program in which when the application program is distributed from the information distribution apparatus together with installation resource information in response to the distribution request, the installation resource information which is information on resources required to install the application program is referred and then the application program is installed if it is determined that the application program is installable under an operating environment of the information processing apparatus.

10. A control program causing a computer to control an information distribution apparatus which includes an application storage unit that stores a plurality of application programs and distributes the application programs to an external apparatus through a communication line, comprising:
determining whether or not a distribution request of an application program has been made from the external apparatus; and
reading the application program corresponding to the distribution request from the application storage unit and then distributing the application program together with installation resource information if it is determined that the distribution request has been made, the installation resource information being information on resources required to install the application program.

11. A control program causing a computer to control an information processing apparatus to which an application program is distributed from an external information distribution apparatus through a communication line, comprising:
requesting the information distribution apparatus to distribute an application program through the communication line;
determining whether or not the application program is installable under an operating environment of the information processing apparatus with reference to installation resource information when the application program is distributed from the information distribution apparatus together with installation resource information in response to the distribution request, the installation resource information being information on resources required to install the application program; and
installing the application program if it is determined that the application program is installable under an operating environment of the information processing apparatus.
